# EUROPEAN PATENT SPECIFICATION

(11) **EP 2 589 232 B1**
(45) Date of publication and mention of the grant of the patent: **18.04.2018**
(21) Application number: 11800031.4
(22) Date of filing: 04.07.2011
(51) Int. Cl.: H04W 4/02, G06F 21/88

(54) **AUTOMATIC CREATION AND MODIFICATION OF DYNAMIC GEOFENCES**
AUTOMATISCHE GEOFENCE-ERSTELLUNG UND -ÄNDERUNG
CRÉATION ET MODIFICATION AUTOMATIQUES DE PÉRIMÈTRES VIRTUELS DYNAMIQUES

(30) Priority: 01.07.2010 US 360899 P
(43) Date of publication of application: 08.05.2013
(73) Proprietor: Absolute Software Corporation, Vancouver, BC V7X 1K8 (CA)
(72) Inventor: BROSCOE, Stephen, Coquitlam, British Columbia V3J 4A2 (CA); LOVELAND, Damien Gerard, Richmond, British Columbia V7C 5N6 (CA)
(74) Representative: Kalkoff & Partner
(86) International application number: PCT/CA2011/000787
(87) International publication number: WO 2012/000107

(56) References cited:
- US-A1- 2007 185 728
- US-A1- 2007 185 728
- US-A1- 2007 244 633
- US-A1- 2007 244 633
- US-A1- 2009 140 886
- US-A1- 2009 140 886

## Description

### Technical Field

This disclosure relates to methods and apparatus for automatically defining and adjusting a geofence for a mobile electronic device.

### Background

The theft of electronic devices such as personal computers, laptop computers, personal digital assistants, tablet computers, mobile phones and personal entertainment devices is prevalent and there is an ongoing need to protect such property. Proprietary or sensitive data is often stored in such devices, so the need to protect such devices as rapidly as possible in situations of risk is self-evident. Existing protection methods include the disabling of the device, deletion of data, monitoring the IP address of a computer that is connected to the internet, monitoring a GPS location of a computer or tracking device, keystroke logging and monitoring images captured from a computer's camera. Geofences are also used to protect devices by disabling them when they leave a pre-determined safe zone. Geofences are typically defined by drawing polygons on a map to enclose the areas in which devices are permitted to operate.

US 2007/0244633 A1 discloses methods and systems relating to location-based services such as social networking, providing demographic information, tracking mobile devices, providing business information, providing an adaptable user interface, remotely effecting a change on a portable electronic device, providing a geofence, outputting location-based information on a mobile device, varying transmissions to and from a mobile device, providing location-based alerts, verifying transactions and tailoring information to the behavior of a user. A geofence may be defined on a portable electronic facility involving inputting the geofence using the portable electronic facility. The centre and radius of geofence may be entered and the geofence may be defined by the location of the portable electronic facility. The geofence may be defined by placing the portable electronic facility at certain points comprising the geofence. The geofence may be moved using the display of the portable electronic facility. In one embodiment, a person may present a credit card at a point of sale. The bank may query the location services facility to determine the location of the portable electronic facility. If it is located at the merchant, the transaction may be authorized. If the portable electronic facility is located at a location other than the merchant, the identity of the user may be deemed to be in question and the transaction may be denied or the merchant may be required to further verify the identity of the user. In one aspect, a database may store data representative of positions and/or velocities associated with a plurality of portable electronic facilities. The database may also store information pertaining to the user's privacy or security. The user may be asked to provide a personal identification number (PIN) which may be entered into a handset that may be the portable electronic facility. This PIN comprises an authentication code needed to access a service such as a website that provides a map showing the location of the user.

US 2009/0140886 A1 describes a method and geofence system for a vehicle in which at least a first and second geofence is established. The first geofence provides for indicating to an operator of a vehicle a limit to the territorial extent of a permitted operational area for the vehicle. The second geofence limits the territorial extent of a permitted operational area for the mobile platform, typically by limiting the mobility of the mobile platform.

US 2007/0185728 A1 describes methods and systems of enforcing a payment schedule of a vehicle or item purchase and for enforcing a permitted geographic location of operation by use of the global positioning system GPS. In response to certain events, and/or on a periodic basis, an on-board device transmits location data to an operation center. A virtual boundary or geo-fence can be defined. If a vehicle is driven outside the geo-fence, the location information is transmitted to the operations center. In response, the operation center can send a message to cause the on-board device to disable the vehicle, or to present a warning, or notify a third party.

### Summary

This summary is not an extensive overview intended to delineate the scope of the subject matter that is described and claimed herein. The summary presents aspects of the subject matter in a simplified form to provide a basic understanding thereof, as a prelude to the detailed description that is presented below.

A computer or other mobile electronic device is configured to be aware of or to determine its location. The mobile electronic device is configured to automatically define a geofence around the locations that it detects itself to be in, and to modify the geofence as new locations are detected and as a user approves such locations. Locations may be static or may be a series of locations detected while a mobile electronic device is being used on the move. The mobile electronic device is also configured to retire areas of the geofence in which the mobile electronic device has not been located for a period of time.

### Brief Description of the Drawings

For a fuller understanding of the nature and advantages of the disclosed subject matter, as well as the preferred mode of use thereof, reference should be made to the following detailed description, read in conjunction with the accompanying drawings. In the following drawings, like reference numerals designate like or similar parts or steps.
Figure 1 is a schematic functional block diagram of a mobile electronic device in accordance with an embodiment of the disclosed subject matter, showing the main components of the mobile electronic device.
Figure 2 is a functional flow diagram of the automatic creation and adjustment of a geofence.
Figure 3 is a functional flow diagram of the automatic creation and adjustment of a geofence with time-related bounds.
Figure 4 is a functional flow diagram of the automatic creation and adjustment of a geofence that is sensitive to motion of the mobile electronic device.
Figures 5-7 schematically represent exemplary geofences in accordance with embodiments of the disclosed subject matter.

### Detailed Description of Specific Embodiments

The term " mobile electronic device" refers herein to an electronic device that may be at risk from being stolen. The mobile electronic device may be any electronic device such as a laptop computer, a personal computer, a tablet computer, a cellphone, a Blackberry®, an iPhone®, an iPod®, an iPad® an electronic book, a personal gaming device or a memory module. The mobile electronic device could also be an apparatus that is embedded in, attached to or fastened around an object to be protected. The detailed descriptions within are presented largely in terms of methods or processes, symbolic representations of operations, functionalities and features of the subject matter disclosed. These method descriptions and representations are the means used by those skilled in the art to most effectively convey the substance of their work to others skilled in the art. A software implemented method or process is here, and generally, conceived to be a self-consistent sequence of steps leading to a desired result. These steps require physical manipulations of physical quantities. Often, but not necessarily, these quantities take the form of electrical or magnetic signals capable of being stored, transferred, combined, compared, and otherwise manipulated. It will be further appreciated that the line between hardware, software and firmware is not always sharp, it being understood by those skilled in the art that software implemented processes may be embodied in hardware, firmware, or software, in the form of coded instructions such as in microcode and/or in stored programming instructions.

### Exemplary Embodiment

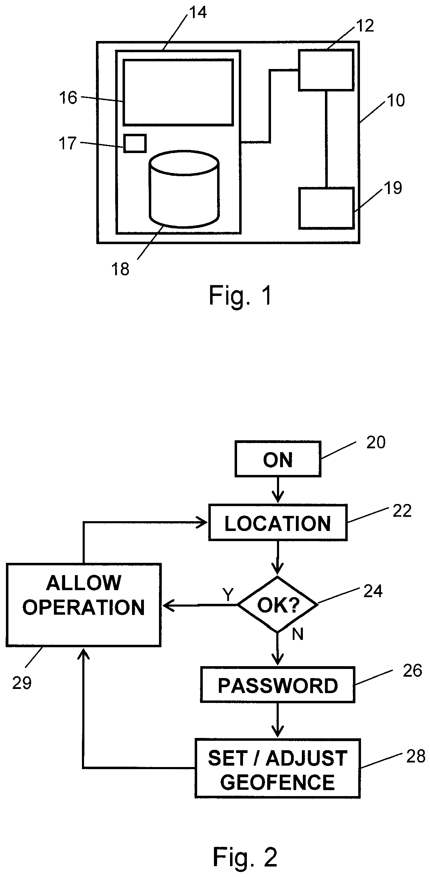

Fig. 1 shows a mobile electronic device 10, such as a laptop computer, that comprises a processor 12, a memory 14 and a location determination module 19. The memory 14 stores computer readable instructions forming a geofencing module 16 that can be processed by the processor 12 to perform the functions of the apparatus described herein. The memory 14 also stores data 18 representing a geofence within which the mobile electronic device 10 is permitted to operate unhindered, and outside of which the mobile electronic device 10 is considered to be at risk. The risk may be a risk of theft, loss or exposure of confidential information to unauthorized persons.

The memory 14 may be split into different physical memories, and the instructions of the geofencing module 16 may be divided between multiple components of the memory 14. Part of the memory 14 and geofencing module 16 may be in BIOS, for example.

The geofencing module 16 may be supported by a persistent agent 17, which itself may be in the BIOS in whole or in part. Such an agent, as used herein, is a software, hardware or firmware agent that is persistent and stealthy, and that resides in a computer or other electronic device. The agent provides servicing functions which require communication with a remote server. The agent is tamper resistant and is enabled for supporting and/or providing one or more services such as data delete, firewall protection, data encryption, location tracking, message notification, surveillance, screen locking and software deployment and updates. In the present disclosure, the agent may support the integrity of the geofencing module. An illustrative embodiment of an agent is found in the commercially available product Computrace Agent™. The technology underlying the Computrace Agent™ has been disclosed and patented in the U.S. and other countries, which patents have been commonly assigned to Absolute Software Corporation. See, for example, U.S. Pat. Nos. 5,715,174; 5,764,892; 5,802,280; 6,087,937; 6,244,758; 6,269,392; 6,300,863; 6,507,914; 7,818,803; and 7,945,709 and related foreign patents. Details of the persistent function of the agent are disclosed in U.S. Patent Application Publication Nos. US2005/0216757 and US2006/0272020. It is feasible to use an equivalent agent to the Computrace Agent™, or an alternative agent with less functionality. The minimal functional attributes of such an agent are to communicate with a monitoring center; to self-repair; and to update and/or repair the geofencing module. Communications may be initiated by the agent, by the monitoring center or by both.

The monitoring center may be a remote server, guardian server or other computer or server that the agent communicates with or sends a message to, and may include multiple computing devices that communicate over a network. For example, provided an internet connection is available to the mobile electronic device, an agent may call the monitoring center once a day (or at some other selected suitable interval) to report the location of the mobile electronic device and/or to receive instructions to be performed by the mobile electronic device. Communications may also be via, for example, a telephone network such as a cellular or satellite network, or SMS service. In one embodiment, the monitoring center may be an email server that receives messages from a remote device, and/or it may be considered as the computer or other equipment used to retrieve email messages from an email server. The monitoring centre may be distributed in more than one location.

The location determination module 19 may be a GPS device, or a combination of a GPS device with such or other technology, e.g. assisted GPS or D-GPS. It may also be based on triangulation from cell phone towers. It may be a module that detects Wi-Fi signal strengths from internet access points, provides these strengths to a remote system with a database of signal strengths correlated with location, and then receives the location back from the system. It may be based on the detection of IP addresses. For example, the public IP address of the device may be inferred by a remote system that provisions the location back to the device. The location determination module 19 may be in part or in whole stored in the memory 14.

### Example Process 1

Referring to Fig. 2, an example process is shown. The mobile electronic device 10 is switched on 20, after which it determines its location 22 with the help of the location determination module 19. If 24 the location detected is a permitted location, i.e. within a geofence, then operation of the mobile electronic device 10 is allowed 29. If 24 the location detected is not OK, i.e. it is outside the geofence, then the device prompts 26 the user of the mobile electronic device 10 to enter a password to unlock the mobile electronic device 10. If it is the first time that the mobile electronic device 10 is being used by the user, there will be no geofence set up, the location will be determined 24 to be not OK, and the mobile electronic device 10 will prompt 26 the user to create a password for the geofence protection system. The password may be the same password as used for other security features, such as for unlocking a locked screen.

All the user needs to do is to create and/or enter a password. During the user's first use of the device, an automatic geofence is created after a password has been created. The geofence may be a default geofence that approximates a circle of a certain radius around the detected location of the device. The user could, however, be given an option to define a tight, medium or wide geofence, such as 50m radius, 500m radius or 5km radius. Other geometries may also be possible, such as a rectangle, square, a polygon corresponding to a city block or part of a city block, or it may be defined in whole or in part by geographical features, such as rivers, shores, etc.

Once a password has been set-up or entered, the geofence is either set 28 for the first time, or adjusted 28 to enclose the newly detected location. Operation of the device is then allowed 29. The location 22 may be monitored periodically, from time to time or continuously, and checked 24 to see whether it is a permitted location or not.

### Example Process 2

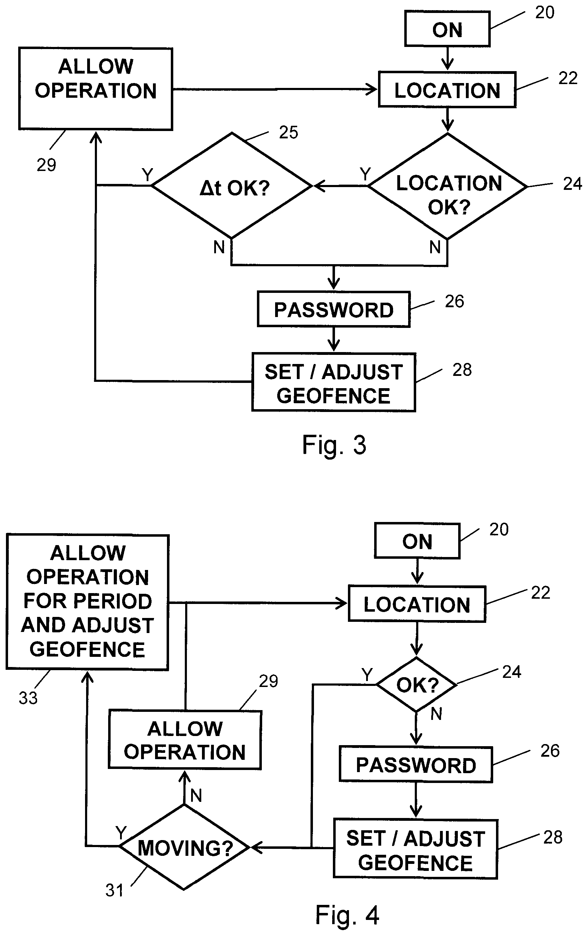

Fig. 3 shows a process that adjusts a geofence according to its usage. For example, if part of a geofence is not used for a period of time, say 6 months, then the locations covered by that part of the geofence become disallowed. Other time limits are possible.

In step 20 the mobile electronic device 10 is turned on. The location is determined 22 and checked 24 to see whether it is within the geofence. If it is outside the geofence, the mobile electronic device 10 prompts 26 the user for a password as before, and the geofence is adjusted 28 to include the new location if the correct password is provided. If the mobile electronic device 10 is detected 24 to be within the geofence, then an additional test is performed to determine 25 the time interval At between the current time and the last time the mobile electronic device 10 was in this particular part of the geofence. If 25 the time interval is too great compared to a preset value, which is either a default value or a value that can be entered by a user, then the device deems that a password 26 is required in order to re-approve the location and add it back 28 to the geofence. However, if 25 the device has recently been in the same location, or same part of the geofence, then operation of the device is allowed 29.

Operation may be allowed 29 for a set amount of time before the location is determined 22 again, or checked 24 again.

In another configuration, operation may be allowed until the location is determined 24 not to be within the geofence. For example, the location may be determined 22 regularly, or frequently, and checks 24 on the location may also be performed regularly or frequently.

In another mode, the system may be configured to request the password if the mobile electronic device 10 stays in the same location for too long. For example, if a laptop gets stolen while in transit, say at an airport or while a user is at a restaurant, it may remain on site because a staff member has stolen it and needs to stay on site until the end of his shift. The system may be configured to re-request the password after half an hour of finding itself being used in a new location. If the correct password is entered, additional half hour periods of use could be granted, or periods of increasing duration could be granted. The result is that the geofence is bounded both in location and time. The time bounds could be set to correspond to a given period of each day, a given day, a working weekday, a weekend day, or they could correspond to given or learnt durations starting each time the device is used in a particular region of the geofence.

### Example Process 3

Fig. 4 shows a process that serves to automatically create a geofence for a device that is in use on the move.

In step 20 the mobile electronic device 10 is turned on. The location is determined 22 and checked 24 to see whether it is within the geofence. If it is outside the geofence, the mobile electronic device 10 prompts 26 the user for a password as before, and the geofence is adjusted 28 to include the new location if the correct password is provided. After the geofence has been adjusted, or if 24 the mobile electronic device 10 was already within the geofence, then the mobile electronic device 10 determines 31 whether it is moving or not. In this sense, movements are to be understood as geographically measurable movements, rather than insignificant motion due to a user operating a hand-held device while sitting or standing.

If the mobile electronic device 10 is not moving, then operation is allowed 29, as in other embodiments. If the mobile electronic device 10 is moving, for example on a bus, a train, in a taxi, in a car, in a plane, on a boat or other mode of transport, then operation of the mobile electronic device 10 will be allowed 33 for a predetermined period of time. During this period of time, the geo-trajectory of the mobile electronic device 10 is recorded and added to the allowable geofence area. The period of time may be half an hour or other default value, or a value set by the user. If the mobile electronic device 10 is being used on a longer journey, then increasing time periods may be successively granted.

After the expiry of the time period, the location is determined 22 again and checked 24 to see whether it lies within or without the geofence.

### Example Geofences

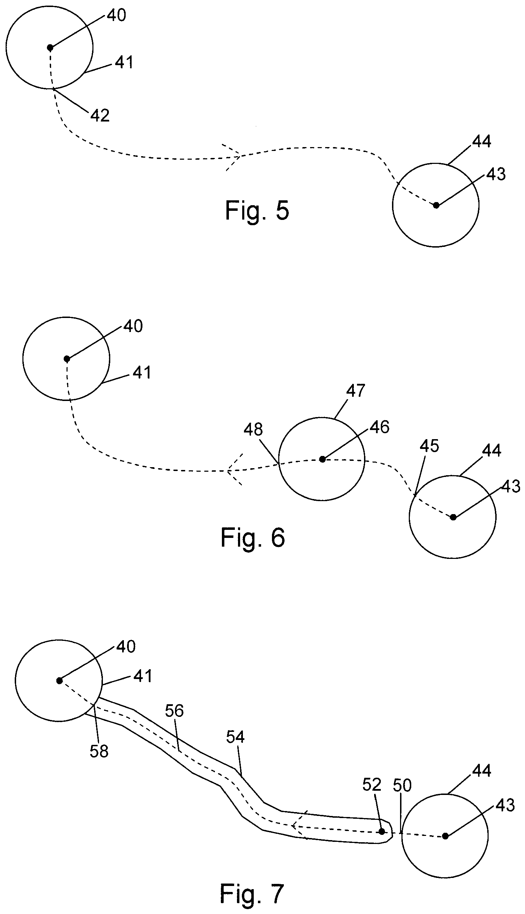

In Fig. 5, a mobile electronic device 10 is first used at location 40, say at a user's work location, resulting in the creation of geofence 41. This is illustrated as a circle around the determined location 40, but other shapes may be possible, such as a polygon corresponding to the perimeter of the building in which the mobile electronic device 10 is located, etc. The size of the geofence may be set to a default value. For example, the user could be given an option to define a tight, medium or wide geofence, such as one with a 50m radius, 500m radius or 5km radius.

After work, the user goes home, and as the user leaves the geofence at location 42, the mobile electronic device 10 is automatically protected by a password lock. If the device is on, the password is requested. If the mobile electronic device 10 is off, or in standby, it will prompt for a password when use of the mobile electronic device 10 is attempted.

In this case, the mobile electronic device 10 is not used until the user arrives home at location 43. Now used for the second time, the password is correctly entered and the geofence augmented by adding a second geofence 44. This may be the same size as the first geofence 41 by default, or it may be of a size entered by the user.

Now referring to Fig. 6, the user travels from home 43 back to work 40. On leaving the home geofence at location 45 the password lock comes on. The user stops at a cafe for breakfast at location 46. On switching on the mobile electronic device 10, the location is detected to be outside the existing geofence and the password is prompted for. As a result of entering the correct password, an additional geofence portion 47 is automatically created. On leaving the cafe, the password lock comes on at point 48. On arriving at work 40, the password for the geofence is not requested, as the mobile electronic device 10 detects that it is within the allowed portion of geofence 41.

Referring to Fig. 7, the user travels from home 43 to work 40 on transit. On leaving the home geofence at location 50, the password lock comes on. When on the transit at location 52, the user enters the geofence password, the mobile electronic device 10 detects that it is moving, and allows use of the mobile electronic device 10 for half an hour, for example. During this time, a new geofence corridor 54 is created, that covers the route 56 taken by the transit. At location 58, the mobile electronic device 10 detects that it is in a previously allowed geofence zone 41 and stops recording or creating the transit geofence 54. In this case, the user arrived at work before the expiry of the half hour permitted, but if the journey had taken longer, then the geofence password would have been requested again in order for continued use of the device. Gradually, through obtaining passwords for each new location, a complex geofence can automatically be created.

If the mobile electronic device 10 is being used when it leaves a geofence, or when time runs out for the creation of an in-transit geofence, then an alert may be given to the user that the password is about to be requested, rather than interrupting a phone call or a critical task. After a grace period, the mobile electronic device 10 could request the password anyway if the user does not take any action.

Passwords are only one example of a way for a user to authorize a location. Other methods may be used, such as biometric methods or use of a proximity device or insertion of a dongle.

### Alerts

In cases where an IT department is alerted if a device leaves a geofence, then alerts may be given only if an incorrect password is entered. This would prevent false alerts when the mobile electronic device 10 is being moved between discontiguous parts of the geofence, or is being legitimately being taken to a new location by the user. Alerts could also be given to the IT department whenever a geofence is changed.

Steps in the flowcharts may be performed in a different order to those illustrated, or they may be combined where shown separately. Some steps may be omitted in some embodiments. Components may be interchanged for equivalents, or varied in number and type.

Except where indicated otherwise, all of the steps and tasks described herein may be performed and fully automated by a computer system, and may be embodied in software code modules executed by one or more general purpose computers. The code modules may be stored in any type of computer-readable medium or other computer storage device. Some or all of the methods may alternatively be embodied in specialized computer hardware. The computer system may, in some cases, be composed of multiple distinct computers or computing devices (e.g., physical servers, workstations, storage arrays, etc,) that communicate and interoperate over a network to perform the described functions. Each such computing device typically includes a processor (or multiple processors) that executes

## Claims

1. A computer-readable medium having stored thereon an executable module component that directs a mobile electronic device (10) to perform a protocol wherein:
a geographic location of the mobile electronic device (10) is determined and compared with a database of authorized locations representing at least one geofence within which the mobile electronic device (10) is permitted to operate;
if the geographic location is within the at least one geofence, an amount of time that has passed since the mobile electronic device (10) was last in the geographic location is determined and if the amount of time is less than a predetermined amount, use of the mobile electronic device (10) is permitted;
if the geographic location is not within the at least one geofence or if the amount of time is more than the predetermined amount, a user of the mobile electronic device (10) is prompted to enter an authorization code;
if the geographic location is not within the at least one geofence and the authorization code is correctly entered by the user, the at least one geofence is expanded to include the geographic location; and
if the geographic location is within the at least one geofence and the authorization code is correctly entered by the user, use of the mobile electronic device (10) is permitted; and
the at least one geofence is not expanded to include the geographic location and use of the mobile electronic device (10) is not permitted if the authorization code is incorrectly entered by the user.

2. The computer-readable medium of claim 1, wherein the protocol further comprises:
determining whether the mobile electronic device (10) is moving; and,
if the mobile electronic device (10) is moving and the geographic location is within the at least one geofence, permitting use of the mobile electronic device (10) for a predetermined duration of time, tracking the geo-trajectory of the mobile electronic device (10) during the predetermined duration of time, and expanding the at least one geofence to include the geo-trajectory of the mobile electronic device.

3. The computer-readable medium of claim 1, wherein the protocol further comprises:
determining a duration of time during which the geographic location of the mobile electronic device (10) is within the at least one geofence; and,
permitting continued use of the mobile electronic device (10) if the duration of time does not exceed a preset maximum duration of time.

4. A method performed by a mobile electronic device (10) to permit authorized use thereof in a geographic location, the method comprising the processor implemented steps of:
determining the geographic location of the mobile electronic device (10);
comparing the geographic location with a database of authorized locations representing at least one geofence within which the mobile electronic device (10) is permitted to operate;
determining an amount of time that has passed since the mobile electronic device (10) was last in the geographic location;
permitting normal use of the mobile electronic device (10) if the geographic location is within the at least one geofence and if the amount of time is less than a predetermined amount;
requesting authorization if the geographic location is not within the at least one geofence or if the amount of time is more than a predetermined amount; and
authorizing the geographic location if a valid authorization is received.

5. A method according to claim 4, wherein use of the mobile electronic device (10) is prevented if authorization is requested and one of an invalid authorization and no authorization is received.

6. A method according to claim 4, wherein more than one location is authorized, and wherein the more than one authorized locations are discontiguous.

7. A method according to claim 4 further comprising the processor implemented step of determining a time or day, wherein the step of permitting normal use comprises permitting normal use if the geographic location is authorized at the determined time or day.

8. A method according to claim 4 further comprising the processor implemented steps of:
determining a duration of time for which the mobile electronic device (10) is in one of the said authorized locations;
detecting whether the duration of time exceeds a predetermined duration of time;
permitting continued use of the mobile electronic device (10) if the duration of time does not exceed the predetermined duration;
requesting authorization if the duration of time exceeds the predetermined duration; and
authorizing the location for a duration longer than the predetermined duration if a valid authorization is received.

9. A method according to claim 4, wherein the location has been previously authorized, further comprising the steps of:
determining whether the mobile electronic device (10) is moving;
if the mobile electronic device (10) is determined to be moving, the step of permitting normal use of the mobile electronic device (10) comprises permitting normal use of the mobile electronic device (10) for a predetermined length of time; and
authorizing previously unauthorized locations into which the mobile electronic device (10) moves during said predetermined length of time.

10. A method according to claim 4, further comprising the steps of:
notifying a user of the mobile electronic device that the mobile electronic device (10) is outside an authorized location;
permitting use of the mobile electronic device (10) for a grace period; and
preventing use of the mobile electronic device (10) after the grace period if an authorization is not received during the grace period.

11. A method according to claim 4 further comprising the step of sending a notification to a remote computer relating to the authorizing of a location or to the receipt of an invalid authorization.

12. A method according to claim 4, wherein the step of authorizing the geographic location comprises authorizing one of a user defined area and a default area around the location.

13. A mobile electronic device (10) configured with executable code for permitting authorized use of the mobile electronic device(10), said executable code capable of causing the mobile electronic device (10) to perform at least the following actions:
determine the location of the mobile electronic device(10);
determine whether the location is authorized;
determine an amount of time that has passed since the mobile electronic device (10) was last in the location;
permit normal use of the mobile electronic device (10) if the location is authorized and if the amount of time is less than a predetermined amount;
request authorization if the location is not authorized or if the amount of time is more than a predetermined amount; and
authorize the location if a valid authorization is received.

14. A mobile electronic device (10) according to claim 13, said executable code capable of causing the mobile electronic device (10) to:
determine a duration of time for which the mobile electronic device (10) is in an authorized location;
determine whether the duration of time exceeds a predetermined duration of time;
permit continued use of the mobile electronic device (10) if the duration of time does not exceed the predetermined duration;
request authorization if the duration of time exceeds the predetermined duration; and
authorize the location for a duration longer than the predetermined duration if a valid authorization is received.

15. A mobile electronic device (10) according to claim 13, wherein the location has been previously authorized, said executable code capable of further causing the mobile electronic device (10) to:
determine whether the mobile electronic device (10) is moving;
if the mobile electronic device (10) is determined to be moving, permit use of the mobile electronic device (10) for a predetermined length of time; and
authorize previously unauthorized locations into which the mobile electronic device (10) moves during said predetermined length of time.

## Patentansprüche

1. Maschinenlesbarer Datenträger, der darauf gespeichert eine ausführbare Modulkomponente aufweist, die eine mobile elektronische Vorrichtung (10) leitet, um ein Protokoll durchzuführen, wobei:
ein geografischer Standort der mobilen elektronischen Vorrichtung (10) bestimmt wird und mit einer Datenbank von zulässigen Standorten verglichen wird, die mindestens einen Geofence darstellen, innerhalb dessen der Betrieb der mobilen elektronischen Vorrichtung (10) erlaubt ist;
wenn der geografische Standort sich innerhalb des mindestens einen Geofences befindet, ein Zeitbetrag, der verstrichen ist, seitdem die mobile elektronische Vorrichtung (10) sich zuletzt an dem geografischen Standort befand, bestimmt wird, und wenn der Zeitbetrag kleiner ist als ein vorbestimmter Betrag, die Verwendung der mobilen elektronischen Vorrichtung (10) erlaubt ist;
wenn der geografische Standort sich nicht innerhalb des mindestens einen Geofences befindet oder wenn der Zeitbetrag größer als der vorbestimmte Betrag ist, ein Benutzer der mobilen elektronischen Vorrichtung (10) aufgefordert wird, einen Berechtigungscode einzugeben;
wenn der geografische Standort nicht innerhalb des mindestens einen Geofences liegt und der Berechtigungscode richtig durch den Benutzer eingegeben wird, der mindestens eine Geofence ausgeweitet wird, um den geografischen Standort zu umfassen; und
wenn der geografische Standort sich innerhalb des mindestens einen Geofences befindet und der Berechtigungscode richtig durch den Benutzer eingegeben wird, die Verwendung der mobilen elektronischen Vorrichtung (10) erlaubt wird; und
der mindestens eine Geofence nicht ausgeweitet wird, um den geografischen Standort zu umfassen, und die Verwendung der mobilen elektronischen Vorrichtung (10) nicht erlaubt wird, wenn der Berechtigungscode nicht richtig durch den Benutzer eingegeben wird.

2. Maschinenlesbarer Datenträger nach Anspruch 1, wobei das Protokoll überdies Folgendes umfasst:
Bestimmen, ob die mobile elektronische Vorrichtung (10) sich bewegt; und
wenn die mobile elektronische Vorrichtung (10) sich bewegt und der geografische Standort sich innerhalb des mindestens einen Geofences befindet, Erlauben der Verwendung der mobilen elektronischen Vorrichtung (10) während einer vorbestimmten Zeitdauer, Verfolgen der Geo-Bewegungsbahn der mobilen elektronischen Vorrichtung (10) während der vorbestimmten Zeitdauer und Ausweiten des mindestens einen Geofences, um die Geo-Bewegungsbahn der mobilen elektronischen Vorrichtung zu umfassen.

3. Maschinenlesbarer Datenträger nach Anspruch 1, wobei das Protokoll überdies Folgendes umfasst:
Bestimmen einer Zeitdauer, während der der geografische Standort der mobilen elektronischen Vorrichtung (10) sich innerhalb des mindestens einen Geofences befindet; und
Erlauben der fortgesetzten Verwendung der mobilen elektronischen Vorrichtung (10), wenn die Zeitdauer nicht eine voreingestellte maximale Zeitdauer überschreitet.

4. Verfahren, das durch eine mobile elektronische Vorrichtung (10) durchgeführt wird, um ihre berechtigte Verwendung an einem geografischen Standort zu erlauben, wobei das Verfahren die folgenden durch den Prozessor ausgeführten Schritte umfasst:
Bestimmen des geografischen Standorts der mobilen elektronischen Vorrichtung (10);
Vergleichen des geografischen Standorts mit einer Datenbank von berechtigten Standorten, die mindestens einen Geofence darstellen, innerhalb dessen der Betrieb der mobilen elektronischen Vorrichtung (10) erlaubt ist;
Bestimmen eines Zeitbetrags, der verstrichen ist, seitdem die mobile elektronische Vorrichtung (10) sich zuletzt an dem geografischen Standort befand;
Erlauben der normalen Verwendung der mobilen elektronischen Vorrichtung (10), wenn der geografische Standort sich innerhalb des mindestens einen Geofences befindet und wenn der Zeitbetrag kleiner als ein vorbestimmter Betrag ist;
Anfordern der Berechtigung, wenn der geografische Standort sich nicht innerhalb des mindestens einen Geofences befindet oder wenn der Zeitbetrag größer als ein vorbestimmter Betrag ist; und
Berechtigen des geografischen Standorts, wenn eine gültige Berechtigung empfangen wird.

5. Verfahren nach Anspruch 4, wobei die Verwendung der mobilen elektronischen Vorrichtung (10) verhindert wird, wenn die Berechtigung angefordert wird und eines von einer ungültigen Berechtigung oder keiner Berechtigung empfangen wird.

6. Verfahren nach Anspruch 4, wobei mehr als ein Standort berechtigt wird und wobei die mehr als ein berechtigten Standorte nicht zusammenhängend sind.

7. Verfahren nach Anspruch 4, das überdies den durch den Prozessor ausgeführten Schritt zum Bestimmen einer Zeit oder eines Tags umfasst, wobei der Schritt zum Erlauben der normalen Verwendung das Erlauben der normalen Verwendung umfasst, wenn der geografische Standort an der bestimmten Zeit oder dem bestimmten Tag berechtigt ist.

8. Verfahren nach Anspruch 4, das überdies die folgenden durch den Prozessor ausgeführten Schritte umfasst:
Bestimmen einer Zeitdauer, während der die mobile elektronische Vorrichtung (10) sich an einem von den berechtigten Standorten befindet;
Feststellen, ob die Zeitdauer eine vorbestimmte Zeitdauer überschreitet;
Erlauben der fortgesetzten Verwendung der mobilen elektronischen Vorrichtung (10), wenn die Zeitdauer nicht die vorbestimmte Dauer überschreitet;
Anfordern der Berechtigung, wenn die Zeitdauer die vorbestimmte Dauer überschreitet; und
Berechtigen des Standorts während einer Dauer, die länger als die vorbestimmte Dauer ist, wenn eine gültige Berechtigung empfangen wird.

9. Verfahren nach Anspruch 4, wobei der Standort zuvor berechtigt wurde, das überdies die folgenden Schritte umfasst:
Bestimmen, ob die mobile elektronische Vorrichtung (10) sich bewegt;
wenn bestimmt wird, dass die mobile elektronische Vorrichtung (10) sich bewegt, der Schritt zum Erlauben der normalen Verwendung der mobilen elektronischen Vorrichtung (10) das Erlauben der normalen Verwendung der mobilen elektronischen Vorrichtung (10) während einer vorbestimmten Zeitlänge umfasst; und
Berechtigen der zuvor nicht berechtigten Standorte, zu denen die bewegliche elektronische Vorrichtung (10) sich während der vorbestimmten Zeitlänge bewegt.

10. Verfahren nach Anspruch 4, das überdies die folgenden Schritte umfasst:
Benachrichtigen eines Benutzers der mobilen elektronischen Vorrichtung, dass die mobile elektronische Vorrichtung (10) sich außerhalb eines berechtigten Standorts befindet;
Erlauben der Verwendung der mobilen elektronischen Vorrichtung (10) während einer Schonfrist; und
Verhindern der Verwendung der mobilen elektronischen Vorrichtung (10) nach der Schonfrist, wenn während der Schonfrist keine Berechtigung empfangen wird.

11. Verfahren nach Anspruch 4, das überdies den Schritt zum Senden einer Benachrichtigung, die die Berechtigung eines Standorts oder den Empfang einer ungültigen Berechtigung betrifft, an einen entfernten Rechner umfasst.

12. Verfahren nach Anspruch 4, wobei der Schritt zum Berechtigen des geografischen Standorts das Berechtigen eines benutzerdefinierten Bereichs oder eines Standardbereichs in der Umgebung des Standorts umfasst.

13. Mobile elektronische Vorrichtung (10), die mit ausführbarem Code ausgestaltet ist, um die berechtigte Verwendung der mobilen elektronischen Vorrichtung (10) zu erlauben, wobei der ausführbare Code in der Lage ist, zu bewirken, dass die mobile elektronische Vorrichtung (10) mindestens die folgenden Vorgänge durchführt:
Bestimmen des Standorts der mobilen elektronischen Vorrichtung (10);
Bestimmen, ob der Standort berechtigt ist;
Bestimmen eines Zeitbetrags, der verstrichen ist, seitdem die mobile elektronische Vorrichtung (10) sich zuletzt an dem Standort befand;
Erlauben der normalen Verwendung der mobilen elektronischen Vorrichtung (10), wenn der Standort berechtigt ist und wenn der Zeitbetrag kleiner als ein vorbestimmter Betrag ist;
Anfordern der Berechtigung, wenn der Standort nicht berechtigt ist oder wenn der Zeitbetrag größer als ein vorbestimmter Betrag ist; und
Berechtigen des Standorts, wenn eine gültige Berechtigung empfangen wird.

14. Mobile elektronische Vorrichtung (10) nach Anspruch 13, wobei der ausführbare Code in der Lage ist, zu bewirken, dass die mobile elektronische Vorrichtung (10) Folgendes durchführt:
Bestimmen einer Zeitdauer, während der sich die mobile elektronische Vorrichtung (10) an einem berechtigten Standort befindet;
Bestimmen, ob die Zeitdauer eine vorbestimmte Zeitdauer überschreitet;
Erlauben der fortgesetzten Verwendung der mobilen elektronischen Vorrichtung (10), wenn die Zeitdauer die vorbestimmte Dauer nicht überschreitet;
Anfordern der Berechtigung, wenn die Zeitdauer die vorbestimmte Dauer überschreitet; und
Berechtigen des Standorts für eine Dauer, die länger ist als die vorbestimmte Dauer, wenn eine gültige Berechtigung empfangen wird.

15. Mobile elektronische Vorrichtung (10) nach Anspruch 13, wobei der Standort zuvor berechtigt wurde, wobei der ausführbare Code in der Lage ist, überdies zu bewirken, dass die mobile elektronische Vorrichtung (10) Folgendes durchführt:
Bestimmen, ob die mobile elektronische Vorrichtung (10) sich bewegt;
wenn bestimmt wird, dass die mobile elektronische Vorrichtung (10) sich bewegt, Erlauben der Verwendung der mobilen elektronischen Vorrichtung (10) während einer vorbestimmten Zeitlänge; und
Berechtigen zuvor nicht berechtigter Standorte, zu denen die mobile elektronische Vorrichtung (10) sich während der vorbestimmten Zeitlänge bewegt.

## Revendications

1. Support lisible par ordinateur sur lequel est stocké un composant de module exécutable qui dirige un dispositif électronique mobile (10) à exécuter un protocole dans lequel :
un emplacement géographique du dispositif électronique mobile (10) est déterminé et comparé à une base de données d'emplacements autorisés représentant au moins un périmètre virtuel à l'intérieur duquel il est permis au dispositif électronique mobile (10) de fonctionner ;
si l'emplacement géographique se trouve à l'intérieur du au moins un périmètre virtuel, une durée qui s'est écoulée depuis que le dispositif électronique mobile (10) s'est retrouvé la dernière fois à l'emplacement géographique est déterminée et si la durée est inférieure à une durée prédéfinie, l'utilisation du dispositif électronique mobile (10) est permise ;
si l'emplacement géographique ne se trouve pas à l'intérieur du au moins un périmètre virtuel ou si la durée est supérieure à la durée prédéfinie, un utilisateur du dispositif électronique mobile (10) est invité à entrer un code d'autorisation ;
si l'emplacement géographique ne se trouve pas à l'intérieur du au moins un périmètre virtuel et que le code d'autorisation est correctement entré par l'utilisateur, le au moins un périmètre virtuel est élargi pour inclure l'emplacement géographique ; et
si l'emplacement géographique se trouve à l'intérieur du au moins un périmètre virtuel et que le code d'autorisation est correctement entré par l'utilisateur, l'utilisation du dispositif électronique mobile (10) est permise ; et
le au moins un périmètre virtuel n'est pas élargi pour inclure l'emplacement géographique et il n'est pas permis d'utiliser le dispositif électronique mobile (10) si le code d'autorisation est incorrectement entré par l'utilisateur.

2. Support lisible par ordinateur selon la revendication 1, dans lequel le protocole consiste en outre à :
déterminer si le dispositif électronique mobile (10) se déplace ; et
si le dispositif électronique mobile (10) se déplace et que l'emplacement géographique se trouve à l'intérieur du au moins un périmètre virtuel, permettre l'utilisation du dispositif électronique mobile (10) pour une durée prédéfinie, suivre la trajectoire géographique du dispositif électronique mobile (10) pendant la durée prédéfinie et élargir le au moins un périmètre virtuel pour inclure la trajectoire géographique du dispositif électronique mobile.

3. Support lisible par ordinateur selon la revendication 1, dans lequel le protocole consiste en outre à :
déterminer une durée au cours de laquelle l'emplacement géographique du dispositif électronique mobile (10) se trouve à l'intérieur du au moins un périmètre virtuel ; et
permettre une utilisation continue du dispositif électronique mobile (10) si la durée ne dépasse pas une durée maximale préréglée.

4. Procédé exécuté par un dispositif électronique mobile (10) pour permettre une utilisation autorisée de celui-ci dans un emplacement géographique, le procédé comprenant les étapes mises en oeuvre par le processeur qui consistent à :
déterminer l'emplacement géographique du dispositif électronique mobile (10) ;
comparer l'emplacement géographique avec une base de données d'emplacements autorisés représentant au moins un périmètre virtuel à l'intérieur duquel il est permis au dispositif électronique mobile (10) de fonctionner ;
déterminer une durée qui s'est écoulée depuis que le dispositif électronique mobile (10) s'est retrouvé la dernière fois à l'emplacement géographique ;
permettre une utilisation normale du dispositif électronique mobile (10) si l'emplacement géographique se trouve à l'intérieur du au moins un périmètre virtuel et si la durée est inférieure à une durée prédéfinie ;
demander une autorisation si l'emplacement géographique ne se trouve pas à l'intérieur du au moins un périmètre virtuel ou si la durée est supérieure à une durée prédéfinie ; et
autoriser l'emplacement géographique si une autorisation valide est reçue.

5. Procédé selon la revendication 4, dans lequel une utilisation du dispositif électronique mobile (10) est empêchée si une autorisation est demandée et en cas d'une autorisation invalide ou d'absence d'autorisation.

6. Procédé selon la revendication 4, dans lequel plus d'un emplacement est autorisé et dans lequel les plus d'un emplacement autorisé ne sont pas contigus.

7. Procédé selon la revendication 4, comprenant en outre l'étape mise en oeuvre par le processeur de détermination d'une heure ou d'une journée, dans lequel l'étape de permission d'une utilisation normale comprend une permission d'utilisation normale si l'emplacement géographique est autorisé à l'heure ou à la journée indiquée.

8. Procédé selon la revendication 4, comprenant en outre les étapes mises en oeuvre par le processeur qui consistent à :
déterminer une durée pour laquelle le dispositif électronique mobile (10) se trouve dans un desdits emplacements autorisés ;
détecter si la durée dépasse une durée prédéfinie ;
permettre une utilisation continue du dispositif électronique mobile (10) si la durée ne dépasse pas la durée prédéfinie ;
demander une autorisation si la durée dépasse la durée prédéfinie ; et
autoriser l'emplacement pour une durée supérieure à la durée prédéfinie si une autorisation valide est reçue.

9. Procédé selon la revendication 4, dans lequel l'emplacement a été précédemment autorisé, comprenant en outre les étapes qui consistent à :
déterminer si le dispositif électronique mobile (10) se déplace ;
s'il est déterminé que le dispositif électronique mobile (10) se déplace, l'étape de permission d'une utilisation normale du dispositif électronique mobile (10) comprend la permission d'une utilisation normale du dispositif électronique mobile (10) pour une durée prédéfinie ;
et
autoriser des emplacements précédemment non autorisés dans lesquels le dispositif électronique mobile (10) se déplace pendant ladite durée prédéfinie.

10. Procédé selon la revendication 4, comprenant en outre les étapes consistant à :
aviser un utilisateur du dispositif électronique mobile que le dispositif électronique mobile (10) se trouve à l'extérieur d'un emplacement autorisé ;
permettre l'utilisation du dispositif électronique mobile (10) pour un délai de grâce ; et
empêcher l'utilisation du dispositif électronique mobile (10) après le délai de grâce si une autorisation n'est pas reçue pendant le délai de grâce.

11. Procédé selon la revendication 4, comprenant en outre l'étape d'envoi d'un avis à un ordinateur distant se rapportant à l'autorisation d'un emplacement ou à la réception d'une autorisation invalide.

12. Procédé selon la revendication 4, dans lequel l'étape d'autorisation de l'emplacement géographique comprend l'autorisation d'une parmi une zone définie de l'utilisateur et une zone par défaut autour de l'emplacement.

13. Dispositif électronique mobile (10) configuré avec un code exécutable pour permettre une utilisation autorisée du dispositif électronique mobile (10), ledit code exécutable pouvant amener le dispositif électronique mobile (10) à exécuter au moins les actions suivantes :
déterminer l'emplacement du dispositif électronique mobile (10) ;
déterminer si l'emplacement est autorisé ;
déterminer une durée qui s'est écoulée depuis que le dispositif électronique mobile (10) s'est retrouvé la dernière fois à l'emplacement ;
permettre une utilisation normale du dispositif électronique mobile (10) si l'emplacement est autorisé et si la durée est inférieure à une durée prédéfinie ;
demander une autorisation si l'emplacement n'est pas autorisé ou si la durée est supérieure à une durée prédéfinie ; et
autoriser l'emplacement si une autorisation valide est reçue.

14. Dispositif électronique mobile (10) selon la revendication 13, ledit code exécutable pouvant amener le dispositif électronique mobile (10) à :
déterminer une durée pour laquelle le dispositif électronique mobile (10) se trouve dans un emplacement autorisé ;
déterminer si la durée dépasse une durée prédéfinie ;
permettre une utilisation continue du dispositif électronique mobile (10) si la durée ne dépasse pas la durée prédéfinie ;
demander une autorisation si la durée dépasse la durée prédéfinie ;
et
autoriser l'emplacement pour une durée supérieure à la durée prédéfinie si une autorisation valide est reçue.

15. Dispositif électronique mobile (10) selon la revendication 13, dans lequel l'emplacement a été précédemment autorisé, ledit code exécutable pouvant amener le dispositif électronique mobile (10) à :
déterminer si le dispositif électronique mobile (10) se déplace ;
s'il est déterminé que le dispositif électronique mobile (10) se déplace, permettre une utilisation du dispositif électronique mobile (10) pour une durée prédéfinie ; et
autoriser des emplacements précédemment non autorisés dans lesquels le dispositif électronique mobile (10) se déplace pendant ladite durée prédéfinie.
